# EUROPÄISCHE PATENTSCHRIFT

(11) **EP 3 212 381 B1**
(45) Veröffentlichungstag und Bekanntmachung des Hinweises auf die Patenterteilung: **07.08.2019**
(21) Anmeldenummer: 16729565.8
(22) Anmeldetag: 15.06.2016
(51) Int. Cl.: B29C 65/18, B29C 65/74, A61J 1/10

(54) **VORRICHTUNG UND VERFAHREN ZUR HERSTELLUNG VON KUNSTSTOFFBEUTELN**
DEVICE AND METHOD FOR MANUFACTURING PLASTIC BAGS
DISPOSITIF ET PROCEDE POUR PRODUIRE DES SACHETS EN PLASTIQUE

(30) Priorität: 15.06.2015 DE 102015109499
(43) Veröffentlichungstag der Anmeldung: 06.09.2017
(73) Patentinhaber: Plümat Plate & Lübeck GmbH & Co., 32339 Espelkamp (DE)
(72) Erfinder: PULLER, Stefan, 32339 Espelkamp (DE); LÜBECK, Frank, 32469 Petershagen (DE); PLATE, Sven-David, 32339 Espelkamp-Frotheim (DE)
(74) Vertreter: Harrison, Robert John
(86) Internationale Anmeldenummer: PCT/EP2016/063736
(87) Internationale Veröffentlichungsnummer: WO 2016/202849

(56) Entgegenhaltungen:
- EP-A2- 1 780 000
- JP-A- 2005 104 512
- US-B1- 6 452 354

## Beschreibung

### Gebiet der Erfindung

Die Erfindung liegt auf dem Gebiet der Kunststoffverarbeitung und der Anlagentechnik. Die Erfindung betrifft eine Vorrichtung und ein Verfahren zur Herstellung von Kunststoffbeuteln.

### Hintergrund der Erfindung

Kunststoffbeutel, häufig in Form von Folienbeuteln, werden im Bereich der Medizin eingesetzt. Ihre Verwendungsmöglichkeiten sind vielfältig. Kunststoffbeutel können zur Aufnahme von Infusionslösungen dienen und werden u.a. auch für die Aufbewahrung von Blut (Blutkonserven) und die Aufbewahrung von sterilen medizinischen Flüssigkeiten benutzt. Kunststoffbeutel benötigen Befüllungs- und Entnahmesysteme, die als sogenannte Ports ausgeführt sind, wobei die Kunststoffbeutel je nach Verwendungszweck ein, zwei oder mehrere Ports aufweisen können.

Die Herstellung von Kunststoffbeuteln erfolgt in bekannter Weise mit einem Herstellungsverfahren, bei dem zwei zu verschweißende Kunststofffolien einem Schweißwerkzeug zugeführt werden. Die Zuführung der miteinander zu verschweißenden Kunststofffolien erfolgt in Form von planparallel übereinanderliegenden Endlos-Kunststofffolien. Diese Kunststofffolien, welche üblicherweise als geblasener Endlosschlauch ungeschnitten oder in Bahnen geschnitten sind, werden von einer Rolle abgezogen. Mittels Tänzerwalzen werden die Kunststofffolien gestreckt gehalten. Dabei wird durch bekannte Mittel (z.B. durch eine Folienklemme) sichergestellt, dass das Zuführungsende der Kunststofffolien lagegenau an der Eingangsseite des aus zwei Werkzeughälften gebildeten Schweißwerkzeuges positioniert ist.

Sodann werden die Werkzeughälften auseinandergefahren und die Kunststofffolien werden durch das geöffnete Werkzeug hindurchgezogen. Zu diesem Zweck greifen Vakuumsauger durch das geöffnete Werkzeug hindurch und erfassen das an der Eingangsseite des Werkzeuges lagegenau positionierte Zuführungsende der Kunststofffolien. Die Vakuumsauger ziehen das Zuführungsende bis auf die Ausgangsseite durch das geöffnete Werkzeug hindurch. Beim oder kurz nach dem Zufahren (Schließen) der Werkzeughälften werden die Schweißnähte zwischen den Kunststofffolien konturgenau entsprechend der Form des oder der Kunststoffbeutel hergestellt. Mittels Trennmesser, die in das Schweißwerkzeug eingebaut sind, werden die Kunststoffbeutel getrennt.

Aus der französischen Patentanmeldung FR 2627128 ist eine Vorrichtung zur Herstellung von Kunststoffbeutel bekannt, die einen Portspender und ein Folientransportmechanismus über ein Greifsystem vorsieht. Dabei wird die Kunststofffolie über Tänzerwalzen und Umlenkrollen getreckt von einem Folienspender abgezogen und einer Folienbedruckeinheit zugeführt. Der Vorschub durch die Vorrichtung hin zum Schweißwerkzeug erfolgt über ein Greifsystem. Dabei führen die Greifer eine horizontale Bewegung aus und ziehen in einem Bewegungstakt die Kunststofffolie von der Rolle durch die Vorrichtung in das Schweißwerkzeug. Durch ein aufwendiges Portspendersystem werden den Kunststoffbeuteln Ports zugeführt. Ein zweites, identisch aufgebautes, Greifsystem zieht die geschweißten Folien anschließend in ein Schneidwerkzeug.

Aus der europäischen Patentanmeldung EP 0539800 A2 ist ebenfalls eine Vorrichtung zur Herstellung von Kunststoffbeuteln bekannt, die ebenfalls über ein aufwendiges Tänzerwalzen und Umlenkrollensystem eine Kunststofffolie von einem Folienspender in Spannung versetzt. Die Kunststofffolie wird über ein Transportsystem in die Anlage gefördert. Die Anlage umfasst dabei eine Schweißeinrichtung und eine Kühleinrichtung zum Kühlen der geschweißten Kunststoffbeutel, welche an dem Transportsystem angebracht ist. Auch bei dieser Vorrichtung sind viele sequentielle Arbeitsschritte notwendig um einen Kunststoffbeutel herzustellen.

Weiteres Herstellungsverfahren von Kunststoffbeuteln sind aus den Patentdokumenten US 3244576, EP 1 380 505, EP 1 541 188 B1, DE 198 08 766 A1, DE 196 47 277 A1 und DE 199 29 018 A1 bekannt.

Aus der Patentanmeldung WO 2006/042710 A1 (Plümat) ist eine Vorrichtung zur Herstellung von Kunststoffbeutel bekannt, die einen Portspender und ein Folientransportsystem mittels eines Greifsystems aufweist. Dabei ziehen die Greifer die Kunststofffolie zum Schweißen und Trennen in das Schweißwerkzeug hinein. Im Schweißwerkzeug werden Ports zwischen die zwei Lagen Kunststofffolie positioniert und mit der Folie verschweißt und anschließend über eine Trennvorrichtung getrennt. Während des Schweiß/Schneidvorgangs noch kann das Greifsystem am geschlossenen Schweißwerkzeug vorbei geführt werden um die Kunststofffolie neu ergreifen. Das Greifsystem ist als ein oder mehrere mechanische Greifer ausgebildet, welche die Kunststofffolie ergreifen.

Aus den Anmeldungen EP 1 066 954 A2 und WO 92 / 02 428 A1 sind jeweils Vorrichtungen und Verfahren zur Herstellung von Kunststoffbeuteln bekannt, bei denen eine Vorrichtung zum Trennen von Lagen einer Kunststofffolie, eine Schweißvorrichtung und einer zwischen den beiden Vorrichtungen liegenden Walzenanordnung bekannt.

Das Dokument EP 1 780 000 A2 offenbart eine Vorrichtung und Verfahren zur Herstellung von Kunststoffbeuteln. Das Dokument offenbart eine bewegliche obere Werkzeugplatte und eine unbewegliche untere Werkzeugplatte.

Das Dokument US 6 452 354 B1 ist auf die Herstellung von Kunststoffbeuteln gerichtet. Das Dokument offenbart einen Servomotor zum Antreiben einer oberen Werkzeugplatte, wobei der Servomotor zur Erfassung der Stromaufnahme verbunden ist.

Das Dokument JP 2005 104512 A ist auf die Herstellung von Kunststoffbeuteln gerichtet. Das Dokument offenbart zwei bewegliche Werkzeuge, die mittels einer Kurbel und eines Servomotors angetrieben werden, wobei der Servomotor mit einem Encoder verbunden ist, der die Pulse der der Drehbewegung des Servomotors erfasst.

Die beschriebenen Herstellungsverfahren sind hinsichtlich der Details der Verfahrensabläufe und der dafür verwendeten Anlagen und Vorrichtungen vielfach optimiert worden. Jedoch ist es bisher nicht gelungen, eine wesentliche Leistungssteigerung bei der Kunststoffbeutelherstellung zu erreichen. Die zeitlichen Abläufe der einzelnen Verfahrensschritte des Zuführens der Ports, des Schweißens und des Schneides erschien nicht veränderbar.

### Kurzfassung der Erfindung

Eine erfindungsgemäße Vorrichtung zur Herstellung von Kunststoffbeuteln aus mindestens zwei Lagen Kunststofffolie umfasst ein Öffnungsgerät, ein Schweißwerkzeug und eine Walzanordnung. Die Walzanordnung ist zwischen dem Öffnungsgerät und Schweißwerkzeug angeordnet. Das Öffnungsgerät zieht abschnittsweise die zwei Lagen Kunststofffolie auseinander. Die Walzanordnung hat gegenüberliegende Walzen und lässt die zwei Lagen Kunststofffolie durchführen und diese an das Schweißwerkzeug weitergeben. Das Schweißgerät schweißt die zwei Lagen Kunststofffolie an einer Kontur zusammen, um einen Kunststoffbeutel herzustellen.

Die Zusammenstellung von Öffnungsgerät, Schweißwerkzeug und einer Walzanordnung vereinfacht das Herstellungsverfahren und ermöglicht den Aufbau einer kompakten Vorrichtung. Das abschnittsweise Auseinanderziehen der mindestens zwei Lagen Kunststofffolie mittels des Öffnungsgerätes erlaubt ein vereinfachtes und schnelleres Anbringen der Kunststoffelemente zwischen die zwei Lagen Kunststofffolie der Beutel.

Das Schweißwerkzeug hat eine untere Werkzeugplatte und eine obere Werkzeugplatte, wobei die untere Werkzeugplatte mittels einer Kurbel und eines Servomotors angetrieben ist.

Die Vorrichtung hat einen oder mehrere Folienspender zur Bereitstellung der zwei Lagen Kunststofffolie.

Die Vorrichtung kann mindestens eine Tänzerwalze umfassen, um die Kunststofffolie unter Zugspannung zu versetzen. Dadurch wird die Kunststofffolie unter Zugspannung in die Folienbedruckeinheit gezogen und bedruckt. Des Weiteren wird dadurch die Kunststofffolie unter Zugspannung in das Schweißwerkzeug geschoben.

Die Vorrichtung kann mindestens eine Umlenkrolle zwischen der Tänzerwalze und dem Öffnungsgerät umfassen, um die Kunststofffolie umzulenken. Dadurch wird ein Umlenken der Kunststofffolie auf die Tänzerwalze und von der Tänzerwalze wieder in die Vorrichtung ermöglicht.

Durch zwei oder mehrere Führungselemente, die sich auf der Umlenkrolle befinden, werden die Kunststofffolien ausgerichtet. Dadurch wird ein seitliches Verschieben der Kunststofffolien auf den Umlenkrollen verhindert, um ein Zuführen der Kunststofffolie in das Schweißwerkzeug zu ermöglichen.

Eine der gegenüberliegenden Walzen der Walzanordnung ist als Antriebswalze und eine der gegenüberliegenden Walzen als Druckwalze ausgeführt. Dadurch wird der Vortrieb der Kunststofffolien ermöglicht. Dieses Folienvorschubsystem kann ohne konstruktive Änderungen in 2-fach oder 4-fach Form-Fill-Seal-Maschinen (FFS-Maschinen) eingesetzt werden. Dadurch kommt es zu Verkürzung der Form-Fill-Seal-Maschinen und zu deutlich geringeren Herstellungskosten der Maschinen.

An einer der gegenüberliegenden Walzen ist eine Anpressvorrichtung angebracht, um die gegenüberliegenden Walzen mittels definierten Anpressdrucks gegenseitig zu drücken. Dadurch muss nur eine der beiden Walzen mittels eines Antriebsystems angetrieben werden. Des Weiteren wird so eine Schlupfbildung verhindert.

Die Vorrichtung umfasst einen Drehzahlsensor, der die Drehzahl einer der gegenüberliegenden Walzen misst. Dadurch können die Drehzahlen der beiden gegenüberliegenden Walzen miteinander verglichen werden. Bei einer Abweichung der beiden Drehzahlen kann dies einem Steuerungssystem übermittelt werden und der Vorschub der Kunststofffolie kann unterbrochen werden, um keinen ungleichmäßigen Einschub in das Schweißwerkzeug zu ermöglichen.

Die Vorrichtung umfasst eine Öffnungsschiene, zur Übernahme der abschnittsweise auseinander gezogenen Lagen Kunststofffolie, wobei die Öffnungsschiene die abschnittsweise auseinandergezogenen zwei Lagen Kunststofffolie durch die Walzanordnung abschnittsweise auseinandergezogen hält.

Die Vorrichtung umfasst ein Schweißwerkzeug, welches Kunststoffelemente an die Kunststoffbeutel zur Bildung von Ports anbringt, die Kunststofffolien an einem konturnahen Heizelement zusammenschweißt und die Kunststofffolien schneidet. Dadurch führt das Schweißwerkzeug gleichzeitige mehrere Arbeitsschritte aus. Eine derartige Ausgestaltung erlaubt einen kompakten Aufbau der Vorrichtung zur Herstellung von Kunststoffbeuteln bei gleichzeitig hohem Durchsatz.

Das Schweißwerkzeug umfasst dabei eine bewegliche, geformte untere Werkzeugplatte und eine im Wesentlichen fixe, geformte obere Werkzeugplatte. Ein derartiges Schweißwerkzeug erlaubt es, dass die Kunststofffolie leicht über die untere Werkzeugplatte gezogen werden kann. Die obere Werkzeugplatte ist fertigungstechnisch einfach und günstig herzustellen, sowie leicht zu reinigen. Im Wesentlichen fixe Teile erhöhen die Standzeit von Anlagen. Mit der beweglich geformten unteren Werkzeugplatte können Kunststofffolien zusammengedrückt und verschweißt werden. Der Schweißbereich kann durch die Kontur der jeweiligen Werkzeugplatten definiert werden. Durch die Kontur der Werkzeugplatten ist auch ein Einschweißen von Kunststoffelementen in die Kunststoffbeutel möglich.

Die Verfahrensschritte zur Herstellung von Kunststoffbeuteln können durch eine erfindungsgemäße Vorrichtung effizienter gestaltet werden. Die mindestens zwei Lagen Kunststofffolie werden dabei zwischen einer fixen, oberen Werkzeugplatte und einer bewegbaren, unteren Werkzeugplatte geschoben. Die bewegbare, untere Werkzeugplatte wird nach oben mittels einer Kurbel und eines Servomotors bewegt, damit die obere Werkzeugplatte und die untere Werkzeugplatte die zwei Lagen Kunststofffolie zusammenpressen. Die Stromaufnahme des Servomotors wird durch ein Messgerät erfasst und in einem Prozessor ausgewertet. Dabei können Unregelmäßigkeiten in dem Ablauf des Prozesses erfasst werden. Der Prozessor kann ebenfalls Daten von einer Sensorikvorrichtung erfassen und Informationen über den Zustand des Prozessablaufs bzw. Qualität des Herstellungsprozesses liefern.

Die zwei Lagen Kunststofffolie werden anschließend entlang einer Kontur erwärmt, damit die zwei Lagen Kunststofffolie zusammengeschweißt werden können.

Vorteilhaft wird bei dem Verfahren zur Herstellung von Kunststoffbeutel auf eine Walze der Walzanordnung ein definierter Anpressdruck mittels einer Anpressvorrichtung aufgebracht, um die Kunststofffolien durchzuführen. Bei dieser Ausgestaltung des Verfahrens muss nur eine der beiden Walzen mittels eines Antriebsystems angetrieben werden. Des Weiteren wird durch diese Verfahrensschritte eine Schlupfbildung verhindert.

Erfindungsgemäß ist auch ein Verfahren zur Herstellung von Kunststoffbeutel bei dem die Drehzahl von einer der beiden gegenüberliegenden Walzen über einen Drehzahlsensor gemessen wird. Ein solches Verfahren kann die Drehzahlen der beiden gegenüberliegenden Walzen miteinander vergleichen. Bei einer Abweichung in den beiden Drehzahlen kann dies einem System übermittelt werden und der Vorschub der Kunststofffolie kann unterbrochen werden, um keinen ungleichmäßigen Einschub in das Schweißwerkzeug zu ermöglichen.

Erfindungsgemäß können zur Verbesserung des Verfahrens gleichzeitig in dem Schweißwerkzeug Kunststoffelemente an die Kunststoffbeutel angebracht, die Kunststofffolien an einer Kontur zusammengeschweißt und die Kunststofffolien geschnitten werden. Dadurch führt das Schweißwerkzeug gleichzeitig mehrere Arbeitsschritte aus. Eine derartige Ausgestaltung erlaubt ein kompaktes Verfahren zur Herstellung von Kunststoffbeuteln bei gleichzeitig hohem Durchsatz.

In dem Verfahren können auch die Kunststofffolie nach dem Schneiden der Kunststofffolie durch eine entgegengesetzte Bewegung der Walzanordnung kurz zurückgezogen werden. Dadurch wird sichergestellt, dass die ausgeschnittenen und geschweißten Kunststoffbeutel vollständig von der Kunststofffolie getrennt sind.

### Beschreibung der Zeichnungen

Fig. 1 zeigt eine Skizze einer Ausführungsform einer Vorrichtung zur Herstellung von Kunststoffbeuteln.
Fig. 2 zeigt schematisch einen Kunststoffbeutel mit Kunststoffelementen.
Fig. 3 zeigt eine Skizze einer Ausführungsform einer Walzenanordnung.
Fig. 4 zeigt schematisch ein Schweißwerkzeug.
Fig. 5 zeigt eine Ausführungsform einer Werkzeugplattenanordnung.
Fig. 6 zeigt eine Ansicht des Antriebs der unteren Werkzeugplatte.

### Detaillierte Erfindungsbeschreibung

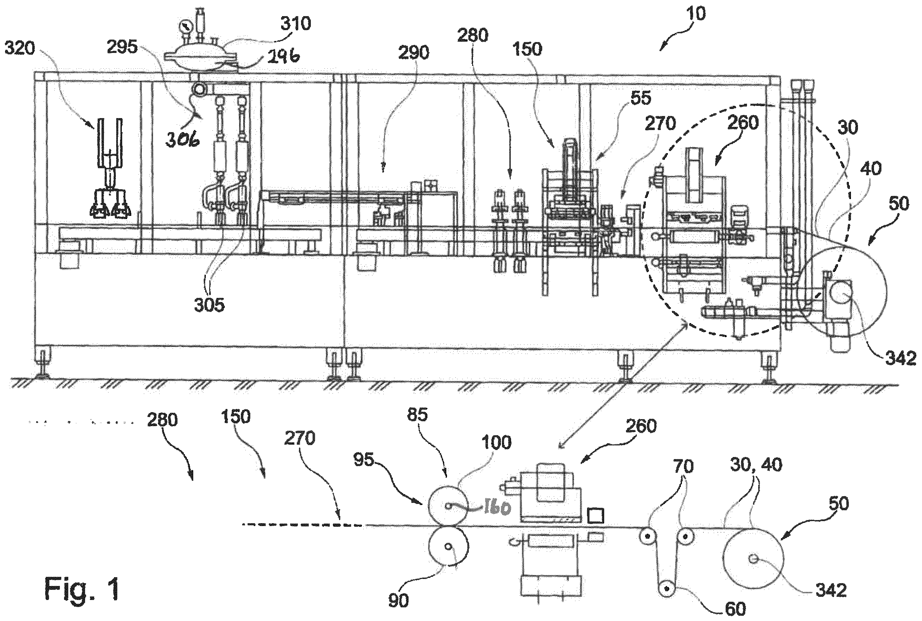

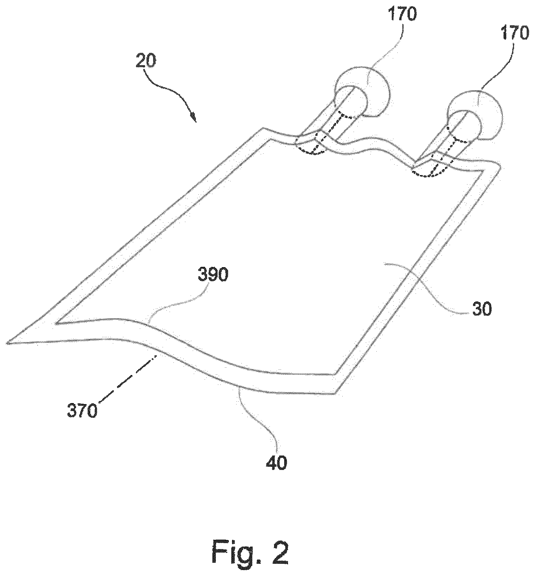

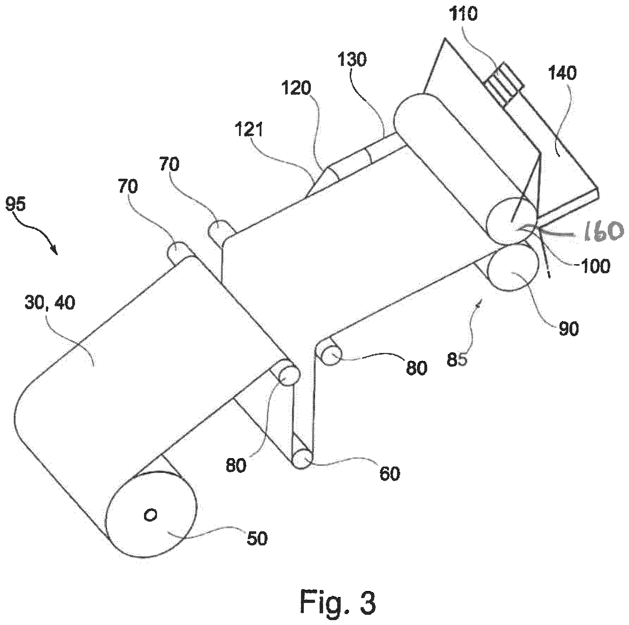

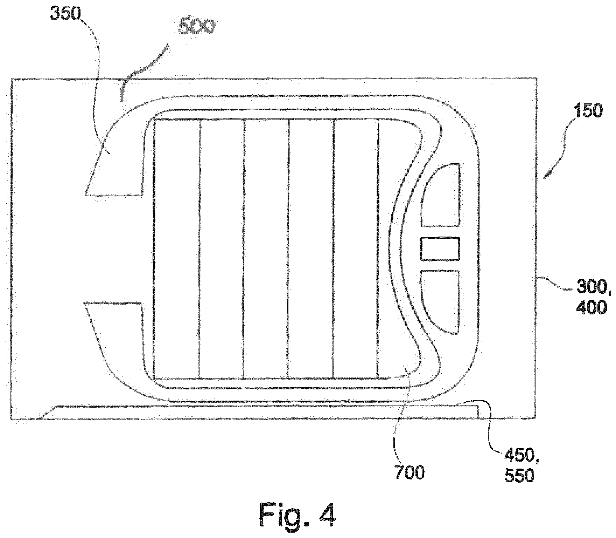

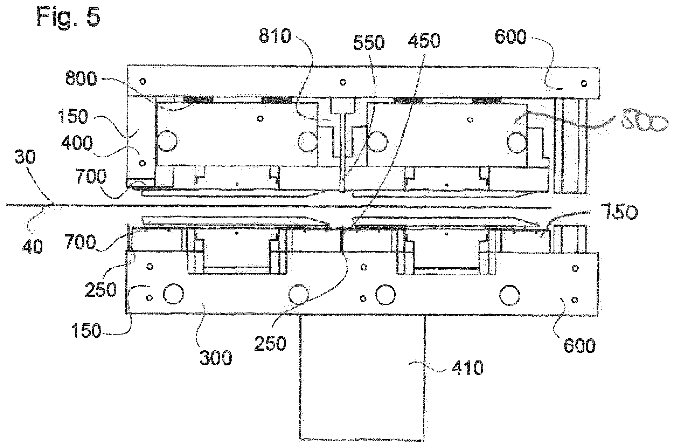

Fig. 1 zeigt beispielsweise eine Vorrichtung 10 zur Herstellung von Kunststoffbeuteln 20 sowie das damit verbundene Herstellungsverfahren. Ein Beispiel des hergestellten Kunststoffbeutels 20 ist in Fig. 2 dargestellt. Fig. 3 stellt einen Folientransportmechanismus 95 in der Vorrichtung 10 zur Herstellung von Kunststoffbeuteln 20 dar. Fig. 4 und 5 zeigen eine Ausführungsform eines Schweißwerkzeugs 150 in der Vorrichtung 10 zur Herstellung von Kunststoffbeuteln 20.

Mindestens zwei Lagen einer Kunststofffolie 30, 40 werden von einem Folienspender 50 zur Verfügung gestellt. Die Kunststofffolien 30, 40 werden dabei von einer Trommel 342 abgerollt. Als Kunststofffolie 30, 40 kann z.B. eine dreischichtige Polypropylenfolie dienen. Die dreischichtige Polypropylenfolie kann z.B. aus Polypropylen und Polymeren gefertigt sein. Eine derartige dreischichtige Polypropylenfolie kann mit einer äußeren Schutzschicht, einer mittleren Barriereschicht und einer inneren Schicht zum verschweißen koextrudiert werden. In der Vorrichtung 10 liegen die beiden inneren Schichten der beiden Kunststofffolien 30, 40 aufeinander und die zwei Lagen der Kunststofffolien 30, 40 sind zusammen auf der Trommel 342 aufgerollt.

Vom Folienspender 50 gelangen die Kunststofffolien 30, 40 mittels eines Folientransportmechanismus 95 zu einer Folienbedruckeinheit 260. Zuvor werden die Kunststofffolien 30, 40 über Umlenkrollen 70 und Tänzerwalzen 60 auf Zugspannung gebracht und anschließend mittels des Folientransportmechanismus 95 in die Folienbedruckeinheit 260 gezogen. In der Folienbedruckeinheit 260 werden auf die Kunststofffolien 30, 40 Informationen über das Material der Kunststofffolien 30, 40, das Herstellungsdatum und Inhaltsstoffe für die zu fertigenden Kunststoffbeutel 20 aufgedruckt.

Der Folientransportmechanismus 95 zieht die mindestens zwei Lagen Kunststofffolie 30, 40 aus der Folienbedruckeinheit 260 heraus und schiebt die Kunststofffolien 30, 40 zu einem Schweißwerkzeug 150, wobei die Kunststofffolien 30, 40 im Wesentlichen horizontal eingeführt und/oder durch das Schweißwerkzeug 150 durchgeführt werden. Ebenfalls in das Schweißwerkzeug 150 werden Kunststoffelemente 170, die von einem oder mehreren Portspendern 55 bereitgehalten werden, eingebracht.

Die Kunststoffelemente 170 durchlaufen vor dem Schweißwerkzeug 150 eine Vorwärmstation 270. Die Kunststoffelemente 170 befinden sich dabei auf den Portspendern 55. In der Vorwärmstation 270 können die Kunststoffelemente 170 für einen verkürzten und verbesserten Schweißschritt im Schweißwerkzeug 150 erwärmt werden. Im Schweißwerkzeug 150 werden die Kunststoffelemente 170 zwischen die zwei Lagen der Kunststofffolien 30, 40 eingebracht.

Das Schweißwerkzeug 150 umfasst eine Werkzeugplattenanordnung 360. Die Werkzeugplattenanordnung 360 umfasst dabei eine untere Werkzeugplatte 300 und eine obere Werkzeugplatte 400. Die untere, geformte Werkzeugplatte 300 ist an der Vorrichtung 10 mittels einer beweglichen Pressvorrichtung 410 verbunden. Die obere, geformte Werkzeugplatte 400 ist im Wesentlichen fix an der Vorrichtung 10 befestigt. Durch den Transportmechanismus 95 werden die Kunststofffolien 30, 40 in das geöffnete Schweißwerkzeug 150 geschoben. Beim Zusammendrücken der unteren Werkzeugplatte 300 auf die obere Werkzeugplatte 400 werden die Kunststofffolien 30, 40 mit den in der Vorwärmstation 270 vorgewärmten Kunststoffelementen 170 an einer Konturnaht zusammengeschweißt.

Das Schweißwerkzeug 150 umfasst zusätzlich eine Trennvorrichtung 250. Beim Zusammendrücken der gegenüberliegenden Werkzeugplatten 300, 400 werden die Kunststofffolien 30, 40 nicht nur zusammengeschweißt, sondern gleichzeitig auch durch die Trennvorrichtung 250 geschnitten. Die beschriebene Ausführungsform des Schweißwerkzeugs 150 ermöglicht demnach ein gleichzeitiges Schweißen und Trennen in einem Arbeitsschritt.

Die gefertigten Kunststoffbeutel 20 werden anschließend aus dem Schweißwerkzeug 150 herausgezogen und einer Nachschweißstation 280 zugeführt. In der Nachschweißstation 280 wird die Verbindung der Kunststoffelemente 170 mit dem aus den Kunststofffolien 30, 40 gefertigten Kunststoffbeutel 20 nochmals erwärmt. Durch das nochmalige Erwärmen des Verbindungsbereichs der Kunststoffelemente 170 mit den Kunststoffbeuteln 20 wird der Verbindungsbereich weiter abgedichtet.

In der beschriebenen Ausführungsform der Erfindung werden die Kunststoffbeutel 20 in einer Transferstation 290 aus der Horizontalen in die Vertikale geschwenkt und einer Beutelfüllmaschine 295 zugeführt.

In der Beutelfüllmaschine 295 werden Befüllvorrichtungen 305 auf oder über die Kunststoffelemente 170 gesetzt und eine Flüssigkeit 296 kann in die Kunststoffbeutel 20 eingefüllt werden. Das Befüllen wird an beiden Kunststoffelementen 170 eines Kunststoffbeutels 20 gleichzeitig vorgenommen. Die Dosierung der Menge der Flüssigkeit 296 kann in einer Ausführungsform über eine Zeitsteuerung eines Dosierventils 306 geschehen. Damit in gleichen Zeiträumen gleiche Mengen der Flüssigkeit 296 eingefüllt werden können, wird die Flüssigkeit 296 mit einem Druckausgleichsbehälter 310 auf einen konstanten Druck (z.B. zwischen 2 und 6 bar) gehalten. Alternativ zur Zeitsteuerung kann zwischen Druckausgleichstank und Dosierventil 306 ein Massendurchflussmesssystem vorhanden sein. Das Massendurchflussmesssystem misst die Flüssigkeit 296 und schließt das Dosierventil 306, sobald die gewünschte Menge der Flüssigkeit 296 in den Kunststoffbeutel 20 eingefüllt ist. Mit diesem Massendurchflusssystem kann die Genauigkeit der Dosierung noch erhöht werden.

Nach dem Befüllen werden die Kunststoffbeutel 20 einer Verschlussstation 320 zugeführt. In der Verschlussstation 320 können die Kunststoffbeutel 20 mit Kappen verschlossen werden. Der Verschluss mit Kappen kann durch Aufdrücken von Kappen mit Dichtungen vorgenommen werden. Alternativ ist auch eine Verschlussstation 320 möglich, bei der Kappen auf die Kunststoffbeutel 20 aufgeschweißt werden.

In Fig. 2 ist ein Kunststoffbeutel 20 mit zwei durch Kunststoffelemente 170 gebildete Ports dargestellt. Die Kunststoffelemente 170 sind zwischen zwei Lagen Kunststofffolie 30, 40 eingeschweißt. Ein solcher Kunststoffbeutel 20 kann Volumina zwischen typischerweise 100 ml und 3000 ml umfassen. Die innere Umrandung 390 des Kunststoffbeutels 20 ist durch die Verschweißung des Kunststoffbeutels 20 in dem Schweißwerkzeug 150 definiert. Die äußere Umrandung 370 ist durch das Schneiden mittels der Trennvorrichtung 250 des Kunststoffbeutels 20 definiert.

In Fig. 3 ist der Folientransportmechanismus 95 der mindestens zwei Lagen Kunststofffolie 30, 40 für die Vorrichtung 10 zur Herstellung von Kunststoffbeuteln 20 näher dargestellt. Die Folienbedruckeinheit 260 ist an sich bekannt und wird hier nicht näher erläutert. Im Folgenden werden Ausführungsformen des Folientransportmechanismus 95 beschrieben.

Die Vorrichtung 10 umfasst einen oder mehrere Folienspender 50, auf denen mindestens zwei Lagen Kunststofffolie 30, 40 aufgerollt sind. In einer Ausführungsform werden die Kunststofffolien 30, 40 über eine zum Folienspender 50 im Wesentlichen horizontal auf gleicher Ebene befindlichen ersten Umlenkrolle 70 auf mindestens eine Tänzerwalze 60 umgelenkt. Die Tänzerwalze 60 ist parallel unterhalb der Umlenkrolle 70 angeordnet. In einer weiteren Ausführungsform kann sich die Tänzerwalze 60 auch oberhalb der Umlenkrolle 70 befinden. Die Tänzerwalze 60 versetzt die Kunststofffolien 30, 40 unter Zugspannung. Von der Tänzerwalze 60 werden die Kunststofffolien 30, 40 an eine zweite Umlenkrolle 70 weitergeleitet, die auf gleicher Ebene wie die erste Umlenkrolle 70 angeordnet ist. Die nun unter Zugspannung versetzten Kunststofffolien 30, 40 befinden sich nun wieder in der im Wesentlichen horizontalen Ausgangsebene. In einer weiteren Ausführungsform können die Umlenkrollen 70 auch versetzt zueinander angeordnet sein. In einer anderen Ausführungsform können mehrere Tänzerwalze 60 angebracht sein, um die Kunststofffolien 30, 40 in Zugspannung zu versetzen.

Die mindestens zwei Lagen Kunststofffolie 30, 40 werden durch mindestens zwei oder mehrere Führungselemente 80, welche auf den Umlenkrollen 70 angebracht sind, ausgerichtet. Durch die Führungselemente 80 wird ein seitliches Verschieben der Kunststofffolien 30, 40 auf den Umlenkrollen 70 verhindert, um ein Zuführen der Kunststofffolie 30, 40 in das Schweißwerkzeug 150 zu ermöglichen. In der Ausführungsform sind die Führungselemente 80 z.B. als Führungsräder ausgebildet. In einer weiteren Ausführungsform können die Umlenkrollen 70 auch ohne Führungselement 80 ausgebildet sein. Die Führungselemente 80 können auch seitlich angebrachte Schienen sein.

Die Vorrichtung 10 umfasst ein Öffnungsgerät 120 zum abschnittsweisen auseinanderziehen der mindestens zwei Lagen Kunststofffolien 30, 40. In der dargestellten Ausführungsform ist das Öffnungsgerät 120 z.B. als ein keilförmiges Element ausgebildet. Dabei werden die mindesten zwei Lagen Kunststofffolien 30, 40 an einer Kante 121 über das keilförmige Element geführt, um die mindestens zwei Lagen Kunststofffolie 30, 40 abschnittsweise auseinanderzuziehen. In weiteren Ausführungsformen kann das Öffnungsgerät 120 andere Formen und Ausführungen z.B. zylindrisch annehmen, welche ein abschnittweises Auseinanderziehen der mindestens zwei Lagen Kunststofffolien 30, 40 voneinander ermöglicht. Das Öffnungsgerät 120 leitet die abschnittsweise auseinandergezogenen Kunststofffolien 30, 40 zur Übernahme der abschnittsweise auseinandergezogenen Kunststofffolien 30, 40 an eine Öffnungsschiene 130 weiter.

Den Vorschub der Kunststofffolien 30, 40 in die Vorrichtung 10 zur Herstellung von Kunststoffbeuteln 20 wird durch eine Walzenanordnung 85 mit gegenüberliegenden Walzen 90, 100 ermöglicht. In der dargestellten Ausführungsform liegen die beiden Walzen 90, 100 im Wesentlichen parallel übereinander. Die Walzanordnung 85 ist dabei in der Vorrichtung 10 zwischen dem Öffnungsgerät 120 und dem Schweißwerkzeug 150 angeordnet. Die Kunststofffolien 30, 40 werden dabei durch den Vorschub der Walzen 90, 100 von dem einen oder mehreren Folienspender 50 durch die Folienbedruckeinheit 260 hindurchgezogen und anschließend bis zu dem Schweißwerkzeug 150 geschoben. In der Walzenanordnung 85 rollen die Walzen 90, 100 in entgegengesetzten Bewegungsrichtungen aufeinander ab.

Die untere Walze 90 ist dabei als Antriebswalze ausgebildet, welche mittels eines Antriebsystems angetrieben wird. Die obere Walze 100 wird durch die Antriebswalze angetrieben. Dabei ist die obere Walze 100 als Druckwalze ausgebildet, welche mittels einer Anpressvorrichtung 110 auf die untere Walze 90 gedrückt wird. Dabei stellt die Anpressvorrichtung 110, welche in der Ausführungsform z.B. als Anpresszylinder ausgeführt ist, einen definierten Anpressdruck bereit. Durch den mittels Anpressvorrichtung 110 aufgebauten Anpressdruck der obere Walze 100 (Druckwalze) auf die untere Walze 90 (Antriebswalze), wird die Schlupfbildung vermieden und ein gleichmäßiger Vorschub der Kunststofffolien 30, 40 ermöglicht. Ein Drehzahlsensor 160 misst dabei die Drehzahl der oberen Walze 100 und vergleicht diese mit der Drehzahl der unteren Walze 90. In einer anderen Ausführungsform misst der Drehzahlsensor 160 die Drehzahl der oberen Walze 100 und der unteren Walze 90 und überprüft diese miteinander. Der Drehzahlsensor 160 ist jedoch für eine generelle Ausführung des Vorschubs durch die Walzanordnung 85 nicht zwingend notwendig. In einer weiteren Ausführungsform ist die obere Walze 100 als Antriebswalze und die untere Walze 90 als Druckwalze ausgebildet.

Das Öffnungsgerät 120 leitet die abschnittsweise auseinandergezogenen Kunststofffolien 30, 40 zur Übernahme der abschnittsweise auseinandergezogenen Kunststofffolien 30, 40 an die Öffnungsschiene 130 weiter. Die Öffnungsschiene 130 hält dabei die abschnittsweise auseinandergezogenen Lagen Kunststofffolie 30, 40 durch die Walzenanordnung 85 abschnittsweise auseinandergezogen. Die Öffnungsschiene 130 ist seitlich zur Walzenanordnung 85 angebracht. Die Öffnungsschiene 130 verläuft dabei bis zum Schweißwerkzeug 150 um die Kunststofffolien 30, 40 bei der Übernahme in das Schweißwerkzeug 150 getrennt zu halten. Durch das abschnittsweise auseinanderziehen der Kunststofffolien 30, 40 können die Kunststoffelemente 170 im Schweißwerkzeug 150 zwischen die mindestens zwei Lagen Kunststofffolie 30, 40 positioniert werden.

Die Vorrichtung 10 umfasst ein Spurelement 140, welches nach der Walzanordnung 85 angebracht ist. Das Spurelement 140 hält die herausgeschobenen abschnittsweise auseinandergezogenen Lagen Kunststofffolie 30, 40 nach der Walzanordnung 85 in einer Spur. In einer weiteren Ausführungsform können auch mehrere Spurelemente 140 angebracht sein, um die Kunststofffolien 30, 40 in der Spur zu halten. In wiederum einer weiteren Ausführungsform umfasst die Vorrichtung 10 zur Herstellung von Kunststoffbeuteln 20 kein Spurelement 140.

In Fig. 4 und in Fig. 5 ist das Schweißwerkzeug 150 zur Herstellung eines Kunststoffbeutels 20 aus den mindestens zwei Lagen Kunststofffolie 30, 40 näher dargestellt. Im Folgenden werden beispielhafte Ausführungsformen des Schweißwerkzeugs 150 beschrieben. Die beschriebene Ausführungsform des Schweißwerkzeugs 150 ermöglicht ein gleichzeitiges Schweißen und Trennen in einem Arbeitsschritt.

Das Schweißwerkzeug 150 besteht aus einer Werkzeugplattenanordnung 360. Die Werkzeugplattenanordnung 360 umfasst dabei zwei sich gegenüberliegende Werkzeugplatten 300, 400, eine untere Werkzeugplatte 300 und eine obere Werkzeugplatte 400. Die obere, geformte Werkzeugplatte 400 ist z.B. fix an die Vorrichtung 10 montiert. Die untere, geformte Werkzeugplatte 300 ist beweglich mittels einer Pressvorrichtung 410 an der Vorrichtung 10 angebracht. Durch die Pressvorrichtung 410 kann die untere Werkzeugplatte 300 auf die obere Werkzeugplatte 400 gepresst werden. In einer weiteren Ausführungsform kann auch die untere Werkzeugplatte 300 im Wesentlichen fix und die obere Werkzeugplatte 400 beweglich an der Vorrichtung 10 montiert sein. In einer zusätzlichen Ausführungsform kann sowohl die obere 400 als auch die untere Werkzeugplatte 300 beweglich an der Vorrichtung 10 angebracht sein.

Die untere Werkzeugplatte 300 und die obere Werkzeugplatte 400 sind jeweils mit konturnahen Heizelementen 350 ausgestattet zum Kontur-Schweißen der mindestens zwei Lagen Kunststofffolie 30, 40. Die konturnahen Heizelemente 350 sind jeweils auf Basisplatten 500 montiert. Jeweils zwei der Basisplatten 500 sind in einem Aspekt der Vorrichtung auf der oberen Werkzeugplatte 400 aufgebracht und zwei der Basisplatten 500 sind auf der unteren Werkzeugplatte 300 aufgebracht. Es könnte allerdings mehr als zwei Basisplatten oder eine einzelne Basisplatte sein. In einer Ausführungsform sind die Basisplatten dauerhaft beheizt. Die konturnahen Heizelemente 350 werden durch die Basisplatten auf eine konstante Temperatur von z.B. 100 °C vorgewärmt. Beim Zusammendrücken der unteren Werkzeugplatte 300 auf die obere Werkzeugplatte 400 werden die mindestens zwei Lagen Kunststofffolie 30, 40 an der Kontur der beiden konturnahen Heizelementen 350 mit den in der Vorwärmstation 270 vorgewärmten und zwischen den mindesten zwei Lagen Kunststofffolie 30, 40 positionierten Kunststoffelementen 170 verschweißt. Die konturnahen Heizelemente 350 haben dabei eine schnelle separate Temperaturregelung, mit der Temperaturen, z.B. 140 °C, oberhalb des Schmelzpunktes der verwendeten Materialen der Kunststofffolie 30, 40 eingestellt und gehalten werden können. Die konturnahen Heizelemente 350 weisen in den Bereichen, in denen die Kunststoffelemente 170 zwischen den Kunststofffolien 30, 40 positioniert sind, Vertiefungen auf, um bei Zusammenpressen der unteren Werkzeugplatte 300 auf die obere Werkzeugplatte 400 die Dicke der Kunststoffelemente 170 auszugleichen. Um beim Zusammenschweißen der Kunststofffolien 30, 40 ein "zusammenkleben" des mittleren ungeschweißten Kunststofffolienbereichs zwischen den konturnahen Heizelementen 350 zu verhindern, sind Kühlplatten 700 jeweils zwischen den konturnahen Heizelementen 350 montiert. Die Kühlplatten 700 sind dabei z.B. aus Kunststoff gefertigt. In einer weiteren Ausführungsform können die Kühlplatten 700 als gefederte Kühlplatten ausgeführt sein. In einer weiteren Ausführungsform können die Kühlplatten 700 als gefederte und/oder vorlaufende Kühlplatten ausgeführt sein.

Auf der oberen Werkzeugplatte 400 des Schweißwerkzeugs 150 ist eine thermische Isolationsplatte 600 montiert. Die thermische Isolationsplatte 600 ist dabei zwischen der Basisplatte 500 und der Vorrichtung 10 angebracht. Die thermische Isolationsplatte 600 ist z.B. aus Kunststoff gefertigt und dient zur Verhinderung der Wärmeableitung der Basisplatte 500 an die Vorrichtung 10. In einer anderen Ausführungsform ist auf der beweglichen aufpressbaren Werkzeugplatte 300 ebenfalls eine thermische Isolationsplatte 600 zwischen der dauerbeheizten Basisplatte 500 und der Pressvorrichtung 410 montiert. In einer weiteren Ausführungsform ist keine thermische Isolationsplatte 600 weder auf der unteren Werkzeugplatte 300 noch auf der oberen Werkzeugplatte 400 verbaut.

Das Schweißwerkzeug 150 umfasst eine Trennvorrichtung 250, zum Trennen der geschweißten Kunststofffolien 30, 40. Die Trennvorrichtung 250 umfasst in dieser Ausführungsform dabei zwei Schneidelemente 450 und ein dessen gegenüberliegendes Anschlagselement 550. Die zwei Schneidelemente 450 sind auf der unteren beweglichen Werkzeugplatte 300 angebracht. Das dem Schneidelement 450 gegenüberliegende Anschlagselement 550 ist auf der im Wesentlichen fixen oberen Werkzeugplatte 400 angebracht. Die Trennvorrichtung 250 ist dabei unmittelbar an dem konturnahen Heizelement 350 angeordnet, um ein Trennen der hergestellten Kunststoffbeutel 20 nahe an der inneren Umrandung 390 zu ermöglichen. Dadurch werden beim Zusammendrücken der beiden gegenüberliegenden Werkzeugplatten 300, 400 die hergestellten Kunststoffbeutel 20 getrennt. In einer anderen Ausführungsform ist das Schneidelement 450 an der im Wesentlichen fixen Werkzeugplatte 400 und das gegenüberliegenden Anschlagselement an der beweglichen Werkzeugplatte 300 angebracht.

Fig. 5 zeigt eine Vorrichtung zur Herstellung von zwei Beuteln in einem Arbeitsgang._Durch Auswechseln der Trennvorrichtung 250, der konturnahen Heizelemente 350 und der Kühlplatten 700 können unterschiedliche Formen von Kunststoffbeutel 20 hergestellt werden oder verschlissene Werkzeugteile ersetzt werden.

Mindestens zwei Tellerfedern 800 sind an dem Schweißwerkzeug 150 angebracht. Die mindestens zwei Tellerfedern 800 sind dabei auf der im Wesentlichen fixen oberen Werkzeugplatte 400 angeordnet. Die mindestens zwei Tellerfedern 800 sind zwischen der dauerbeheizten Basisplatte 500 und der Vorrichtung 10 angebracht. Die Tellerfedern 800 sind dabei in Aussparungen 810 in der thermischen Isolationsplatte 600 angeordnet. Durch die Anordnung der Tellerfedern 800 im Schweißwerkzeug 150 können sich die gegenüberliegenden Werkzeugplatten 300, 400 beim Zusammendrücken selbst zentrieren. Durch die Selbstzentrierung mittels Tellerfedern 800 wird beim Zusammendrücken der Werkzeugplatten 300, 400 eine Verbiegung der Werkzeugplatten 300, 400 ausgeglichen. Zur Vermeidung dieses Kippeffekts der Werkzeugplatten 300, 400 sind die Tellerfedern 800 mit einem einstellbaren Anschlag versehen. Dadurch wird ein sauberes Schweißen und Trennen der Kunststofffolien 30, 40 gewährleistet. Durch die Funktionsweise der Tellerfedern 800 wird ein gleichmäßiger Abstand der äußeren Umrandung 370 zur inneren Umrandung 390 der hergestellten Kunststoffbeutel 20 ermöglicht. In einer weiteren Ausführungsform sind die Tellerfedern 800 an der unteren Werkzeugplatte 300 angebracht. In einer anderen Ausführungsform umfasst das Schweißwerkzeug 150 keine Tellerfedern.

Das Schweißwerkzeug 150 umfasst zusätzlich eine Sensorikvorrichtung 750. Die Sensorikvorrichtung 750 erfasst die Heizenergie der einzelnen Werkzeugplatten 300, 400, insbesondere der dauerbeheizten Basisplatte 500 und der konturnahen Heizelemente 350, um die notwendige Schweißenergie zur Herstellung der Kunststoffbeutel 20 zu regeln. In einer weiteren Ausführungsform umfasst das Schweißwerkzeug 150 keine Sensorikvorrichtung 750.

Um sicher zu stellen, dass die ausgeschnittenen und geschweißten Kunststoffbeutel 20 vollständig von der Kunststofffolie 30, 40 getrennt sind, wird nach jedem Schweiß/Schneidschritt die Kunststofffolie 30, 40 mittels einer entgegengesetzten Bewegungsrichtung der Walzanordnung 85 kurz zurückgezogen. Danach wird mittels des Folientransportmechanismus 95 wieder die Kunststofffolie 30, 40 in das Schweißwerkzeug 150 geschoben.

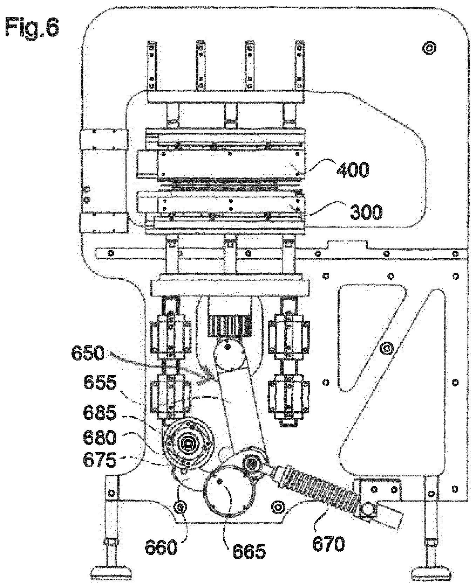

Fig. 6 zeigt den Antrieb für die Pressvorrichtung 410. Der Antrieb umfasst einen Servomotor 675 mit einer drehbaren Welle 665. Die Welle 665 ist mit der unteren Werkzeugplatte 300 mittels einer Kurbel 650 verbunden. Die Kurbel 650 ist L-förmig mit einer Treibstange 655 und einem Stangeelement 660. Die Verbindung mit der Treibstange 655 und dem Stangeelement 660 der Kurbel 650 ist in einem Aspekt mit einer Feder 670 an der Vorrichtung 10 angebracht. Die Feder 670 unterstützt in diesem Aspekt kraftmäßig den Servomotor 675 beim Antrieb der Pressvorrichtung 410 und ermöglicht die Verwendung eines kleineren Servomotors 675. In einem weiteren Aspekt ist keine Feder vorhanden.

Der Servomotor 675 ist mit einem Messgerät 680 zur Erfassung der Stromaufnahme in dem Servomotor 675. Das Messgerät 680 ist mit einem Prozessor 685 zur Auswertung der Messergebnisse des Messgeräts 680. Durch die Messwerte der Stromaufnahme des Servomotors 675 kann z.B. der Verschleiß der Schneideelemente 450 oder ein Hindernis in oder an der Pressvorrichtung 410 erfasst werden. Bei der Inbetriebnahme der Vorrichtung werden die Schneidelemente so eingestellt, dass die Kunststofffolien 30, 40 komplett durchgetrennt werden, um die einzelnen Beutel herzustellen. Der Stromverbrauch für den Servomotor 675 wird in diesem Zustand der Vorrichtung gemessen und als Referenzwert in einem Speicher in dem Prozessor 685 oder in einem separaten Speicher gespeichert. Bei einem Verschleiß der Schneideelemente 450 beispielsweise muss der Servomotor 650 mehr Kraft auf die untere Werkzeugplatte 300 ausüben und verwendet dafür mehr Strom. Diese Zunahme in der Stromaufnahme wird gemessen und in dem Prozessor 685 ausgewertet. Die Auswertung liefert einen Hinweis auf den Zustand der Schneideelemente 450, damit die Scheideelemente 450 rechtzeitig ausgetauscht werden können. Bei einem Hindernis in oder an der Pressvorrichtung wird auch die Stromaufnahme zunehmen, da der Servomotor 675 mehr Kraft benötigt, um das Hindernis zu überwinden. Auch in diesem Fall wertet der Prozessor 685 die Stromaufnahme aus und kann das Verfahren für die Beseitigung des Hindernisses unterbrechen.

Des Weiteren ermöglicht die permanente Messung und Überwachung der Stromaufnahme durch Vergleich mit dem gespeicherten Referenzwert des optimal eingestellten Prozesses jederzeit die Detektion von Fehlern im Prozess. Beispielsweise kann eine zu geringe Stromaufnahme ein Hinweis auf eine zu dünne Kunststofffolie 30, 40 sein, d.h. die erforderliche Kraft der Schneideelemente 450 zum Schneiden der Folie ist in diesem Fall geringer. Neben dem Verschleiß der Schneideelemente 450 lässt sich beispielsweise auch eine Fehlstellung der Schneideelemente 450 erkennen. Sollten die Schneideelemente 450 nach einem Wechsel versehentlich nicht mechanisch fest genug angezogen worden sein, so können sie sich im laufenden Prozess verstellen und der Schnitt der Kunststofffolien 30, 40 ist dann nicht mehr einwandfrei. Über die Änderung der Stromaufnahme lässt sich dieser Effekt detektieren. Dadurch erhält man eine Aussage über die Beutelqualität und man kann schlecht geschnittene Beutel 20 aussortieren.

In Zusammenhang mit den Daten von der Sensorikvorrichtung kann der Prozessor 685 zusammen mit den Angaben über die Stromaufnahme Ergebnisse über die Qualität des Herstellverfahrens liefen. Insbesondere kann der Prozessor 685 eine Vorhersage über die Qualität der Konturnaht zwischen den Folien 30 und 40 liefern.

### Bezugszeichenliste

- 10: Vorrichtung
- 20: Kunststoffbeutel
- 30, 40: Kunststofffolie
- 50: Folienspender
- 55: Portspender
- 60: Tänzerwalze
- 70: Umlenkrolle
- 80: Führungselemente
- 85: Walzanordnung
- 90: untere Walze
- 95: Folientransportmechanismus
- 100: obere Walze
- 110: Anpressvorrichtung
- 120: Öffnungsgerät
- 121: Kante
- 130: Öffnungsschiene
- 140: Spurelement
- 150: Schweißwerkzeug
- 160: Drehzahlsensor
- 170: Kunststoffelemente
- 185: Nest
- 190: Schweißform
- 250: Trennvorrichtung
- 260: Folienbedruckeinheit
- 270: Vorwärmstation
- 280: Nachschweißstation
- 290: Transferstation
- 295: Beutelfüllmaschine
- 296: Flüssigkeit
- 300: untere Werkzeugplatte
- 305: Befüllvorrichtung
- 306: Dosierventil
- 310: Druckausgleichsbehälter
- 320: Verschlussstation
- 342: Trommel
- 350: konturnahes Heizelement
- 360: Werkzeugplattenanordnung
- 370: äußere Umrandung
- 380: Einsätze
- 390: innere Umrandung
- 400: obere Werkzeugplatte
- 410: Pressvorrichtung
- 450: Schneidelement
- 500: dauerbeheizte Basisplatte
- 550: fixes Anschlagselement
- 600: thermische Isolationsplatte
- 650: Antrieb
- 655: Treibstange
- 660: Stangenelement
- 665: Welle
- 670: Feder
- 675: Servomotor
- 680: Messgerät
- 685: Prozessor
- 700: Kühlplatte
- 750: Sensorikvorrichtung
- 800: Tellerfedern
- 810: Aussparungen

## Patentansprüche

1. Vorrichtung (10) zur Herstellung von Kunststoffbeuteln (20) aus mindestens zwei Lagen Kunststofffolie (30, 40) mit einem Schweißwerkzeug (150) zum Zusammenschweißen der mindesten zwei Lagen Kunststofffolie (30, 40) an einer Kontur, wobei das Schweißwerkzeug (150) eine untere Werkzeugplatte (300) und eine obere Werkzeugplatte (400) aufweist, **dadurch gekennzeichnet, dass** die untere Werkzeugplatte (300) mittels einer Kurbel (650) und eines Servomotors (675) angetrieben ist, und wobei der Servomotor (675) mit einem Messgerät (680) zur Erfassung der Stromaufnahme verbunden ist.

2. Vorrichtung (10) zur Herstellung von Kunststoffbeuteln (20) nach Anspruch 1, wobei die Vorrichtung einer Walzanordnung (85) mit gegenüberliegenden Walzen (90, 100) zur Weitergabe der mindestens zwei Lagen Kunststofffolie (30, 50) an das Schweißwerkzeug (150) aufweist.

3. Vorrichtung (10) zur Herstellung von Kunststoffbeuteln (20) nach Anspruch 1 oder 2, wobei die Vorrichtung (10) einen oder mehrere Folienspender (50) zur Bereitstellung der mindestens zwei Lagen Kunststofffolie (30, 40) umfasst.

4. Vorrichtung (10) zur Herstellung von Kunststoffbeuteln (20) nach einem der vorhergehenden Ansprüche, wobei die Vorrichtung (10) mindestens eine Tänzerwalze (60) umfasst, um die mindestens zwei Lagen Kunststofffolie (30, 40) unter Zugspannung zu versetzen.

5. Vorrichtung (10) zur Herstellung von Kunststoffbeuteln (20) nach Anspruch 4, wobei die Vorrichtung (10) mindestens eine Umlenkrolle (70) zwischen der mindestens eine Tänzerwalze (60) und dem Schweißwerkzeug (150) umfasst, um die mindestens zwei Lagen Kunststofffolie (30, 40) umzulenken.

6. Vorrichtung (10) zur Herstellung von Kunststoffbeuteln (20) nach Anspruch 5, wobei die mindestens eine Umlenkrolle (70) zwei oder mehrere Führungselemente (80) umfasst, um die mindestens zwei Lagen Kunststofffolie (30, 40) auszurichten.

7. Vorrichtung (10) zur Herstellung von Kunststoffbeuteln (20) nach einem der Ansprüche 2 bis 6, wobei eine der gegenüberliegenden Walzen (90, 100) der Walzenanordnung (85) als Antriebswalze (90; 100) und eine der gegenüberliegenden Walzen (90, 100) als Druckwalze (90; 100) ausgeführt ist.

8. Vorrichtung (10) zur Herstellung von Kunststoffbeuteln (20) nach einem der Ansprüche 2 bis 7, wobei an einer der gegenüberliegenden Walzen (90, 100) eine Anpressvorrichtung (110) angebracht ist, um die gegenüberliegenden Walzen (90, 100) mittels definierten Anpressdrucks gegenseitig zu drücken.

9. Vorrichtung (10) zur Herstellung von Kunststoffbeuteln (20) nach einem der Ansprüche 1 bis 7, wobei die Vorrichtung (10) einen Drehzahlsensor (160) umfasst, der die Drehzahl einer der gegenüberliegenden Walzen (90, 100) misst.

10. Vorrichtung (10) zur Herstellung von Kunststoffbeuteln (20) nach einem der Ansprüche 1 bis 9, wobei die Vorrichtung (10) einen oder mehrere Portspender (55) zur Bereitstellung von Kunststoffelementen (170) umfasst.

11. Vorrichtung (10) zur Herstellung von Kunststoffbeuteln (20) nach einem der vorhergehenden Ansprüche, wobei die obere Werkzeugplatte (400) eine Basisplatte 500 aufweist, welche mittels Tellerfeder (800) mit der Vorrichtung verbunden ist.

12. Verfahren zur Herstellung von Kunststoffbeuteln (20), umfassend:
i. Schieben von mindestens zwei Lagen Kunststofffolie (30, 40) zwischen einer fixen, oberen Werkzeugplatte (400) und einer bewegbaren, unteren Werkzeugplatte (300);
ii. Antreiben der bewegbaren, unteren Werkzeugplatte (300) nach oben mittels eines Kurbel (655) und Servomotors (675), damit die obere Werkzeugplatte (400) und die untere Werkzeugplatte (300) die zwei Lagen Kunststofffolie (30, 40) zusammenpressen und Durchführung eines Messung der Stromaufnahme des Servomotors (675);
iii. Erwärmen der zwei Lagen Kunststofffolie (30, 40) entlang einer Kontur, damit die zwei Lagen Kunststofffolie (30, 50) zusammengeschweißt werden können.

13. Verfahren nach Anspruch 12, wobei die mindestens zwei Lagen Kunststofffolie (30, 40) aus einem oder mehreren Folienspendern (50) entnommen werden.

14. Verfahren nach einem der Ansprüche 12 und 13, wobei auf eine Walze (90, 100) der Walzanordnung (85) ein definierter Anpressdruck mittels einer Anpressvorrichtung (110) aufgebracht wird um die mindestens zwei Lagen Kunststofffolie (30, 40) durchzuführen.

15. Verfahren nach einem der Ansprüche 12 bis 14, wobei die Drehzahl von einer der beiden gegenüberliegenden Walzen (90, 100) über einen Drehzahlsensor (160) gemessen wird.

16. Verfahren nach einem der Ansprüche 12 bis 15, wobei in dem Schweißwerkzeug (150) die mindestens zwei Lagen Kunststofffolien (30, 40) geschnitten werden.

17. Verfahren nach einem der Ansprüche 12 bis 16, wobei die mindestens zwei Lagen Kunststofffolie (30, 40) nach dem Schneiden der mindestens zwei Lagen Kunststofffolie (30, 40) durch eine entgegengesetzte Bewegung der Walzanordnung (85) kurz zurückgezogen werden.

18. Verfahren nach einem der Ansprüche 13 bis 17, weiter umfassend eine Meldung bei Feststellung einer Unstimmigkeit bei der Stromaufnahme.

## Claims

1. An apparatus (10) for manufacturing plastic bags (20) from at least two layers of plastic film (30, 40) with a welding tool (150) for welding together the at least two layers of plastic film (30, 40) at an edge, wherein the welding tool (150) has a lower tool plate (300) and an upper tool plate (400), **characterized in that** the lower tool plate (300) is driven by means of a crank (650) and a servomotor (675), and wherein the servomotor (675) is connected with a measuring device (680) for detecting the power consumption.

2. The apparatus (10) for manufacturing plastic bags (20) according to claim 1, wherein the apparatus has a roller arrangement (85) with oppositely disposed rollers (90, 100) for passing on the at least two layers of plastic film (30, 50) to the welding tool (150).

3. The apparatus (10) for manufacturing plastic bags (20) according to claim 1 or 2, wherein the apparatus (10) comprises one or several film dispensers (50) for providing the at least two layers of plastic film (30, 40).

4. The apparatus (10) for manufacturing plastic bags (20) according to any one of the preceding claims, wherein the apparatus (10) comprises at least one compensating roller (60) in order to put the at least two layers of plastic film (30, 40) under tension.

5. The apparatus (10) for manufacturing plastic bags (20) according to claim 4, wherein the apparatus (10) comprises at least one deflecting roller (70) between the at least one compensating roller (60) and the welding tool (150) in order to deflect the at least two layers of plastic film (30, 40).

6. The apparatus (10) for manufacturing plastic bags (20) according to claim 5, wherein the at least one deflecting roller (70) comprises two or several guide elements (80) in order to align the at least two layers of plastic film (30, 40).

7. The apparatus (10) for manufacturing plastic bags (20) according to any one of claims 2 to 6, wherein one of the oppositely disposed rollers (90, 100) of the roller arrangement (85) is executed as a drive roller (90; 100) and one of the oppositely disposed rollers (90, 100) as a pressure roller (90; 100).

8. The apparatus (10) for manufacturing plastic bags (20) according to any one of claims 2 to 7, wherein at one of the oppositely disposed rollers (90, 100) a pressing apparatus (110) is attached in order to mutually press the oppositely disposed rollers (90, 100) by means of a defined contact pressure.

9. The apparatus (10) for manufacturing plastic bags (20) according to any one of claims 1 to 7, wherein the apparatus (10) comprises a speed sensor (160) which measures the rotational speed of one of the oppositely disposed rollers (90, 100).

10. The apparatus (10) for manufacturing plastic bags (20) according to any one of claims 1 to 9, wherein the apparatus (10) comprises one or several port dispensers (55) for providing plastic elements (170).

11. The apparatus (10) for manufacturing plastic bags (20) according to any one of the preceding claims, wherein the upper tool plate (400) has a base plate (500) which is connected to the apparatus by means of a plate spring (800).

12. A method for manufacturing plastic bags (20), comprising:
i. pushing at least two layers of plastic film (30, 40) between a fixed, upper tool plate (400) and a movable, lower tool plate (300);
ii. driving the movable, lower tool plate (300) upwards by means of a crank (655) and a servomotor (675), so that the upper tool plate (400) and the lower tool plate (300) press together the two layers of plastic film (30, 40), and carrying out a measurement of the power consumption of the servomotor (675);
iii. heating the two layers of plastic film (30, 40) along an edge, so that the two layers of plastic film (30, 50) can be welded together.

13. The method according to claim 12, wherein the at least two layers of plastic film (30, 40) are removed from one or several film dispensers (50).

14. The method according to any one of claims 12 and 13, wherein a defined contact pressure is applied to a roller (90, 100) of the roller arrangement (85) by means of a pressing apparatus (110) in order to guide through the at least two layers of plastic film (30, 40).

15. The method according to any one of claims 12 to 14, wherein the rotational speed of one of the two oppositely disposed rollers (90, 100) is measured via a speed sensor (160).

16. The method according to any one of claims 12 to 15, wherein in the welding tool (150) the at least two layers of plastic films (30, 40) are cut.

17. The method according to any one of claims 12 to 16, wherein, after cutting the at least two layers of plastic film (30, 40), the at least two layers of plastic film (30, 40) are pulled back briefly by an opposite movement of the roller arrangement (85).

18. The method according to any one of claims 13 to 17, further comprising a message upon detection of an inconsistency in the power consumption.

## Revendications

1. Dispositif (10) pour fabriquer des poches en plastique (20) à partir d'au moins deux couches de film plastique (30, 40) avec un outil de soudage (150) pour souder ensemble les au moins deux couches de film plastique (30, 40) au niveau d'un contour, dans lequel l'outil de soudage (150) comprend une plaque d'outil inférieure (300) et une plaque d'outil supérieure (400), **caractérisé en ce que** la plaque d'outil inférieure (300) est entraînée au moyen d'une manivelle (650) et d'un servomoteur (675), dans lequel le servomoteur (675) est relié à un dispositif de mesure (680) pour détecter la consommation d'énergie.

2. Dispositif (10) pour fabriquer des poches en plastique selon la revendication 1, dans lequel le dispositif comprend un agencement de rouleaux (85) avec des rouleaux disposés de façon opposée (90, 100) pour passer ou transmettre, à l'outil de soudage (150), les au moins deux couches de film plastique (30, 50).

3. Dispositif (10) pour fabriquer des poches en plastique (20) selon la revendication 1 ou 2, dans lequel le dispositif (10) comprend un ou plusieurs distributeurs de film (50) pour fournir les au moins deux couches de film plastique (30, 40).

4. Dispositif (10) pour fabriquer des poches en plastique (20) selon l'une quelconque des revendications précédentes, le dispositif (10) comprend au moins un rouleau de compensation (60) pour mettre en tension les au moins deux couches de film plastique (30, 40).

5. Dispositif (10) pour fabriquer des poches en plastique (20) selon la revendication 4, dans lequel le dispositif (10) comprend au moins un rouleau de déviation (70) entre le au moins un rouleau de compensation (60) et l'outil de soudage (150) pour dévier les au moins deux couches de film plastique (30, 40).

6. Dispositif (10) pour fabriquer des poches en plastique (20) selon la revendication 5, dans lequel le au moins un rouleau de déviation (70) comprend deux ou plusieurs éléments de guidage (80) pour aligner les au moins deux couches de film plastique (30, 40).

7. Dispositif (10) pour fabriquer des poches en plastique (20) selon l'une quelconque des revendications 2 à 6, dans lequel un des rouleaux disposés de façon opposée (90 ; 100) de l'agencement de rouleaux (85) est implémenté en tant que rouleau d'entraînement (90 ; 100) et un des rouleaux disposés de façon opposée (90 ; 100) est implémenté en tant que rouleau de pression (90 ; 100).

8. Dispositif (10) pour fabriquer des poches en plastique (20) selon l'une quelconque des revendications 2 à 7, dans lequel un dispositif de pressage (110) est fixé au niveau de l'un des rouleaux disposés de façon opposée (90, 100) afin d'appuyer ou presser mutuellement sur les rouleaux disposés de manière opposée (90, 100) au moyen d'une pression de contact définie.

9. Dispositif (10) pour fabriquer des poches en plastique (20) selon l'une quelconque des revendications 1 à 7, dans lequel le dispositif (10) comprend un capteur de vitesse de rotation (160) qui mesure la vitesse de rotation de l'un des rouleaux disposés de manière opposée (90, 100).

10. Dispositif (10) pour fabriquer des poches en plastique (20) selon l'une quelconque des revendications 1 à 9, dans lequel le dispositif (10) comprend un ou plusieurs distributeurs de ports (55) pour fournir des éléments en plastique (170).

11. Dispositif (10) pour fabriquer des poches en plastique (20) selon l'une quelconque des revendications précédentes, la plaque d'outil supérieure (400) présente une plaque de base (500) qui est reliée au dispositif par l'intermédiaire d'un ressort à lames (800).

12. Procédé de fabrication de poches en plastique (20), comprenant :
i. glisser au moins deux couches de film plastique (30, 40) entre une plaque d'outil supérieure, fixe (400) et une plaque d'outil inférieure mobile (300) ;
ii. entrainer la plaque d'outil inférieure mobile (300) vers le haut au moyen d'une manivelle (655) et d'un servomoteur (675), de telle sorte que la plaque d'outil supérieure (400) et la plaque d'outil inférieure (300) appuient et pressent ensemble les deux couches de film plastique (30, 40), et réaliser une mesure de la consommation d'énergie du servomoteur (675) ;
iii. chauffer les deux couches de film plastique (30, 40) le long d'un contour, pour que les deux couches de film plastique (30, 50) puissent être soudées l'une à l'autre.

13. Procédé selon la revendication 12, dans lequel les au moins deux couches de film plastique (30, 40) sont prises d'un ou de plusieurs distributeurs de film (50).

14. Procédé selon l'une quelconque des revendications 12 et 13, dans lequel une pression de contact définie est appliquée, au moyen d'un appareil de pressage (110), à un rouleau (90, 100) de l'agencement de rouleaux (85) pour guider lesdites au moins deux couches de film plastique (30, 40).

15. Procédé selon l'une quelconque des revendications 12 à 14, dans lequel la vitesse de rotation de l'un des deux rouleaux disposés de manière opposée (90, 100) est mesurée par l'intermédiaire d'un capteur de vitesse de rotation (160).

16. Procédé selon l'une quelconque des revendications 12 à 15, dans lequel les au moins deux couches de film plastique (30, 40) sont coupées dans l'outil de soudage (150).

17. Procédé selon l'une quelconque des revendications 12 à 16, dans lequel, après découpe des au moins deux couches de film plastique (30, 40), les au moins deux couches de film plastique (30, 40) sont ramenées brièvement par un mouvement opposé de l'agencement de rouleaux (85).

18. Procédé selon l'une quelconque des revendications 13 à 17, comprenant en outre un message lors de la détection d'une incohérence dans la consommation d'énergie.
